(19) Europäisches Patentamt
European Patent Office
Office européen des brevets

(11) **EP 4 443 334 A1**

(12) **EUROPEAN PATENT APPLICATION**

(43) Date of publication:
**09.10.2024 Bulletin 2024/41**

(21) Application number: **24155066.4**

(22) Date of filing: **31.01.2024**

(51) International Patent Classification (IPC):
**G06N 3/045** (2023.01)    **G06N 3/0495** (2023.01)
**G06N 3/082** (2023.01)    **G06N 3/084** (2023.01)

(52) Cooperative Patent Classification (CPC):
**G06N 3/082; G06N 3/0495;** G06N 3/0464;
G06N 3/084

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.02.2023 US 202318176216**

(71) Applicant: **NXP B.V.**
**5656 AG Eindhoven (NL)**

(72) Inventors:
• **Chen, Xupeng**
**5656AG Eindhoven (NL)**
• **Ravindran, Satish**
**5656AG Eindhoven (NL)**
• **Wu, Ryan Haoyun**
**5656AG Eindhoven (NL)**

(74) Representative: **Schmütz, Christian Klaus
Johannes
NXP Semiconductors Germany GmbH
Intellectual Property Group
Beiersdorfstr. 12
22529 Hamburg (DE)**

(54) **DEEP NEURAL NETWORK MODEL COMPRESSION**

(57)    Various embodiments relate to a system and method of pruning a machine learning model, including: training the machine learning model using training input data; calculating alpha values for different parts of the machine learning model based on gradients used in training the machine learning model wherein the alpha values are an importance metric; accumulating the calculated alpha values across training iterations; and pruning the machine learning model based upon the accumulated alpha values.

FIG. 3

EP 4 443 334 A1

**Description**

**TECHNICAL FIELD**

Various exemplary embodiments disclosed herein relate generally to deep neural network model compression including using gradient based saliency metric.

**BACKGROUND**

Deep Neural Networks (DNN) have achieved state of the art results in different domains. For example, with respect to autonomous driving, highly efficient DNNs are desired which can fit on tiny edge processors with very low size, weight, and power. One of the most common ways of reducing the DNN model size is through pruning.

**SUMMARY**

A summary of various exemplary embodiments is presented below. Some simplifications and omissions may be made in the following summary, which is intended to highlight and introduce some aspects of the various exemplary embodiments, but not to limit the scope of the invention. Detailed descriptions of an exemplary embodiment adequate to allow those of ordinary skill in the art to make and use the inventive concepts will follow in later sections.

Various embodiments relate to a data processing system comprising instructions embodied in a non-transitory computer readable medium, the instructions for pruning a machine learning model in a processor, the instructions, including: training the machine learning model using training input data; calculating alpha values for different parts of the machine learning model based on gradients used in training the machine learning model, wherein the alpha values are an importance metric; accumulating the calculated alpha values across training iterations; and pruning the machine learning model based upon the accumulated alpha values.

Various embodiments are described, wherein pruning the machine learning model includes: sorting the accumulated calculated alpha values; selecting a lowest predetermined number of sorted values; and pruning the machine learning model based upon the selected number of values.

Various embodiments are described, wherein calculating alpha values for different parts of the machine learning model based on gradients used in training the machine learning model includes summing the gradients for the different parts of the machine learning model over the different parts of the machine learning model.

Various embodiments are described, wherein summing the gradients for the different parts of the machine learning model over the different parts includes assigning an importance score to filters in the machine learning model at a class level.

Various embodiments are described, wherein summing the gradients for the different parts of the machine learning model over the different parts includes weighing the gradients before summing.

Various embodiments are described, wherein summing the gradients for the different parts of the machine learning model over the different parts includes calculating:

$$\alpha_{ik}^{c} = \overbrace{\frac{1}{Z} \sum_{m'} \sum_{n'}}^{\text{global average pooling}} \sum_{m} \sum_{n} \quad \underbrace{\frac{\partial\, y_{m'n'}^{c}}{\partial A_{i\,mn}^{k}}}_{\text{gradients via backprop}}$$

where $\alpha_{ik}^{c}$ are the alpha values, Z = m' · n' · m · n, m' and n' are the position index of each element in the final output $y_{m'n'}^{c}$, m and n are the position index of each element in the different part,

$$\underbrace{\frac{\partial\, y_{m'n'}^{c}}{\partial A_{i\,mn}^{k}}}$$

is the gradient, and $A_i^k$ is the $k^{th}$ feature map activation of the $i^{th}$ layer.

Various embodiments are described, wherein accumulating the calculated alpha values across training iterations includes summing $\alpha_{ik}^c$ over the training set.

Various embodiments are described, wherein accumulating the calculated alpha values across training iterations includes calculating:

$$\alpha_{ik} = \sum_{\Omega} \alpha_{ik}^c,$$

where $\Omega$ represents the entire training set and classes and $\alpha_{ik}$ is an importance metric for the $i^{th}$ layer and the $k^{th}$ channel.

Various embodiments are described, wherein pruning the machine learning model includes sorting the $\alpha_{ik}$ values, selecting a lowest predetermined number of sorted values, and pruning the machine learning model based upon the selected number of values.

Various embodiments are described, wherein pruning the machine learning model based upon the selected number of values includes pruning one of classes, weights, kernels, features, layers, filters, units, and neurons.

Various embodiments are described, wherein the machine learning model is one of a deep-learning neural network and a convolutional neural network.

Various embodiments are described, wherein training the machine learning model using training input data includes: initializing the machine learning model; inputting a plurality of training input data tensors into the machine learning model in a plurality of iterations; estimating a gradient update based upon an output of the machine learning model; and updating machine learning model weights based upon the gradient update using backpropagation.

Further various embodiments relate to a method of pruning a machine learning model, including: training the machine learning model using training input data; calculating alpha values for different parts of the machine learning model based on gradients used in training the machine learning model, wherein the alpha values are an importance metric; accumulating the calculated alpha values across training iterations; and pruning the machine learning model based upon the accumulated alpha values.

Various embodiments are described, wherein pruning the machine learning model includes sorting the accumulated calculated alpha values, selecting a lowest predetermined number of sorted values, and pruning the machine learning model based upon the selected number of values.

Various embodiments are described, wherein calculating alpha values for different parts of the machine learning model based on gradients used in training the machine learning model wherein the includes: summing the gradients for the different parts of the machine learning model over the different parts of the machine learning model.

Various embodiments are described, wherein summing the gradients for the different parts of the machine learning model over the different parts includes assigning an importance score to filters in the machine learning model at a class level.

Various embodiments are described, wherein summing the gradients for the different parts of the machine learning model over the different parts includes weighing the gradients before summing.

Various embodiments are described, wherein summing the gradients for the different parts of the machine learning model over the different parts includes calculating:

$$\alpha_{ik}^c = \overbrace{\frac{1}{Z} \sum_{m'} \sum_{n'} \sum_{m} \sum_{n}}^{\text{global average pooling}} \underbrace{\frac{\partial y_{m'n'}^c}{\partial A_{i\,mn}^k}}_{\text{gradients via backprop}}$$

where $\alpha_{ik}^c$ are the alpha values, $Z = m' \cdot n' \cdot m \cdot n$, $m'$ and $n'$ are the position index of each element in the final output $y_{m'n'}^c$, $m$ and $n$ are the position index of each element in the feature map,

$$\underbrace{\frac{\partial\, y^{c}_{m'n'}}{\partial A^{k}_{i\,mn}}}$$

is the gradient, and $A^{k}_{i}$ is the $k^{th}$ feature map activation of the $i^{th}$ layer.

Various embodiments are described, wherein accumulating the calculated alpha values across training iterations includes summing $\alpha^{c}_{ik}$ over the training set.

Various embodiments are described, wherein accumulating the calculated alpha values across training iterations includes calculating:

$$\alpha_{ik} = \sum_{\Omega} \alpha^{c}_{ik},$$

where $\Omega$ represents the entire training set and $\alpha_{ik}$ is an importance metric for the $i^{th}$ layer and the $k^{th}$ channel.

Various embodiments are described, wherein pruning the machine learning model includes sorting the $\alpha_{ik}$ values, selecting a lowest predetermined number of sorted values, and pruning the machine learning model based upon the selected number of values.

Various embodiments are described, wherein pruning the machine learning model based upon the selected number of values includes pruning one of classes, weights, kernels, features, layers, filters, units, and neurons.

Various embodiments are described, wherein the machine learning model is one of a deep-learning neural network and a convolutional neural network.

Various embodiments are described, wherein training the machine learning model using training input data includes: initializing the machine learning model; inputting a plurality of training input data tensors into the machine learning model in a plurality of iterations; estimating a gradient update based upon an output if the machine learning model; and updating machine learning model weights based upon the gradient update using backpropagation.

## BRIEF DESCRIPTION OF THE DRAWINGS

In order to better understand various exemplary embodiments, reference is made to the accompanying drawings, wherein:

FIG. 1 illustrates an example DNN architecture for a radar target classification or detection application.
FIG. 2 illustrates the operation of the DNN during inference.
FIG. 3 illustrates how gradient-based pruning works.
FIGs. 4A-D illustrate the correlation between filters selected for pruning by gradient-weight pruning and L1 norm pruning.
FIGs. 4C and 4B illustrate the plots for the first and second layers, respectively, of the binary CFAR detection model without atrous convolution.
FIG. 5 illustrates a flow diagram that illustrates a gradient-weight pruning method.
FIG. 6 illustrates an exemplary hardware diagram for implementing the gradient-weight pruning method described in FIGs. 1-4.

To facilitate understanding, identical reference numerals have been used to designate elements having substantially the same or similar structure and/or substantially the same or similar function

## DETAILED DESCRIPTION

The description and drawings illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be for pedagogical purposes to aid the reader in understanding the principles of the invention and the concepts contributed by the inventor(s) to furthering the art and are to be construed as being without limitation to such specifically recited examples and conditions. Additionally, the term, "or," as used herein, refers to a non-exclusive or (*i.e.,* and/or), unless otherwise indicated (*e.g.,* "or else" or "or in the alternative"). Also, the various embodiments described herein are not necessarily mutually exclusive, as some embodiments can be combined with one or more other embodiments to form new embodiments.

DNN models have achieved a lot of success in different problem domains, such as for example, in autonomous driving. The trend has been to increase the model size to achieve greater representation power, but this comes at a cost of increased compute and memory resources which is not suitable for real time low power embedded devices. Therefore, techniques need to be developed to reduce the model size (and thereby compute and memory), without reducing the model accuracy metrics.

Small DNNs with low memory and compute footprint are vital for a power limited systems such as autonomous driving. Many perception stack artificial intelligence (AI) modules used in autonomous driving and other AI based systems are very large and require hardware processing that requires significant power to run. Low size, weight, and power embedded devices do not have the power budget to support such large models. Therefore, model compression is a common intermediate step to port it on embedded hardware. There are three common techniques used to reduce the model size: structured pruning, unstructured pruning, and quantization.

Structured pruning involves removing entire nodes (in a multi-layer perceptron (MLP)) or entire filters (in a convolutional neural network (CNN)) thereby reducing the number of parameters and the amount of compute in the model. This is suitable for vector processors as there are no non uniform zeros in the compute pipeline.

Unstructured pruning involves removing a few weights (in an MLP) or some filter parameters (in a convolutional neural network (CNN)). While it is possible to achieve greater compression with this technique, it is usually not suitable for vector processors as the pruning results in non-uniform distribution of the weights.

Quantization involves reducing the bit precision of the model and data thereby enabling computation in lower precision math and reduction of model size

Embodiments of a saliency metric which evaluates the importance of the feature maps for the end application and comes up with a ranked list to enable reduction of the number of feature maps will be described herein. A technique to reduce the size of a machine learning model, i.e., a pruning technique, using a novel saliency metric which quantifies the importance of the model parameters in the different layers using a class activation map will also be described. The characteristics of this gradient-weight pruning technique include: a new data dependent saliency metric enabling ranking of model weights for pruning; and the ability to tune the saliency metric based on class importance. For example, it is more important to detect pedestrians versus vehicles in a dense city scenario, so more relevant filters for cars may be pruned as compared to filters for pedestrians.

A CNN usually includes multiple layers stacked on top of each other, with each successive layer extracting more semantic information by reducing the feature size and increasing the receptive field. This is usually followed by a fully connected layer which selectively weighs different combinations of features and produces a final score for regression or classification depending on the application.

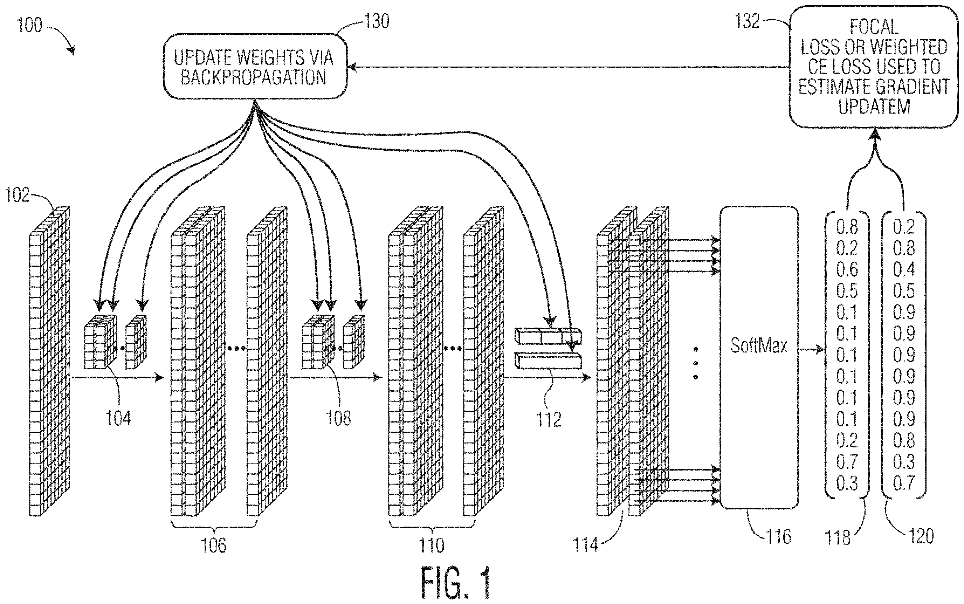

FIG. 1 illustrates an example DNN architecture for a radar target classification or detection application. More specifically the DNN 100 may be a CNN. While the pruning technique is described herein in the context of this specific model, it is generalizable with slight modifications to any kind of DNN or other types of machine learning models with different architectures.

FIG. 1 illustrates the training procedure for the proposed DNN 100. The DNN 100 includes of a plurality of layers of first 2D convolutional filters 104 that process an input data tensor 102 to produce first multi-channel feature tensors 106. A plurality of second 2D convolutional filters 108 process the first multi-channel feature tensors 106 to produce second multi-channel feature tensors 110. A plurality of 1D convolutional filters 112 process the second multi-channel feature tensors 110. Final layers 114 process the output of the 1D convolutional filters 112 and the output is fed into a softmax layer 116. The output of the softmax layer 116 is a set of detection probability outputs 118 and clutter noise probability outputs 120. In order to deal with the extreme class imbalance between true target detections and background clutter or noise, focal loss or cross-entropy loss is used during backpropagation to train the weights of the network 132. During training of the DNN 100, the weights of the first 2D convolutional filters 104, second 2D convolutional filters 108, and first 1D convolutional filters 112 of the DNN 100 are updated using backpropagation 130.

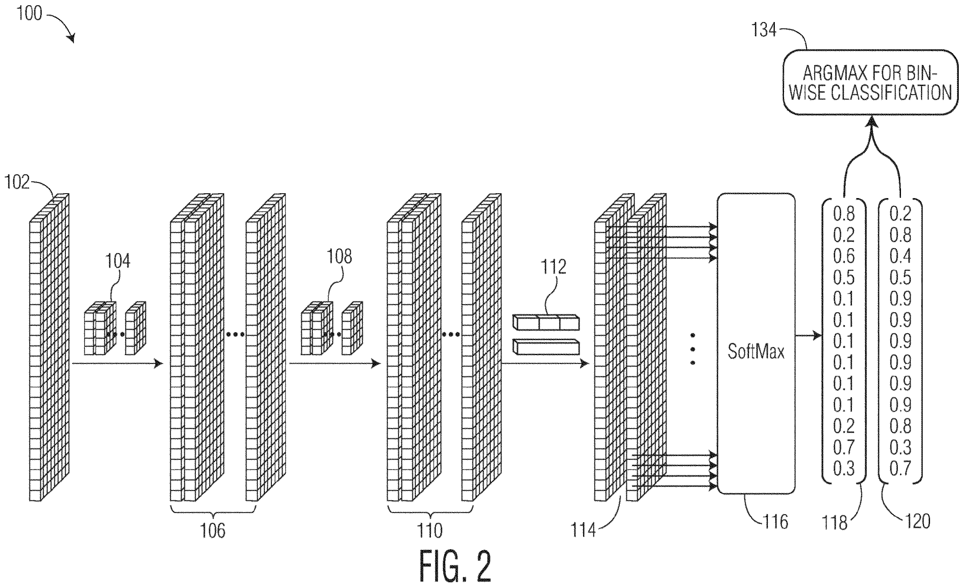

FIG. 2 illustrates the operation of the DNN 100 during inference. The operation is the same as a forward pass of the DNN 100 during training with a batch size of 1. There are two ways of using the output of the DNN 100. Either the output of the softmax layer 116 can directly be used to classify the respective bin, or the raw scores before the softmax layer 116 may be processed further to estimate the threshold, either through another fully connected layer or through classical clustering techniques. In this implementation, the binwise softmax is used to do a binary classification. An argument maximum function ARGMAX 134 is applied to each output bin to identify an output bin with the highest detection probability output 118 and clutter noise probability output 120.

The most popular structured pruning approach is called $L_1$ based pruning. It calculates the sum of absolute value of k-th convolutional kernel $c_i^k$ within each layer $i$ as the important score $\alpha_i^k$ as follows:

$$\alpha_i^k = \sum_s \sum_m \sum_n \left| c_{i\,mns}^k \right|.$$

Here $m, n$ and $s$ are the height, width and channel numbers of the kernel $c_i^k$. Then the $\alpha_i^k$ could be ranked within layer $i$ and any number of kernels or channels may be removed based on the desired or set pruning ratio. Although the $L_1$ based pruning method is straightforward and easy to use, the determination of channel's importance is not related to the model's decision-making process. It is not known how kernels influence the neural networks' prediction performance based on its absolute sum, other than a basic intuition that the lower the norm of the filter, the lesser effect it will have on the eventual output of the model. Thus, a more decision orientated and interpretable structured pruning method called gradient-based pruning is now described based on the Gradient based Class Activation Map (Grad CAM) technique, which is used in literature for DNN interpretability.

Grad CAM uses the gradients of any target concept (a categorical label in a classification network or a sequence of words in the captioning network or an ROI (Regions of Interest) in the network) flowing into the last convolutional layer or earlier convolution layers to produce a localization map highlighting the important regions in the input data tensor (for example, an image) for the model to make a prediction.

Based on gradients in the DNN 100 during training, the importance score assigned to each convolutional for a specific prediction may be obtained. This importance score may then be used to prune channels with lower value within each convolution layer based on the score accumulated across the entire training dataset.

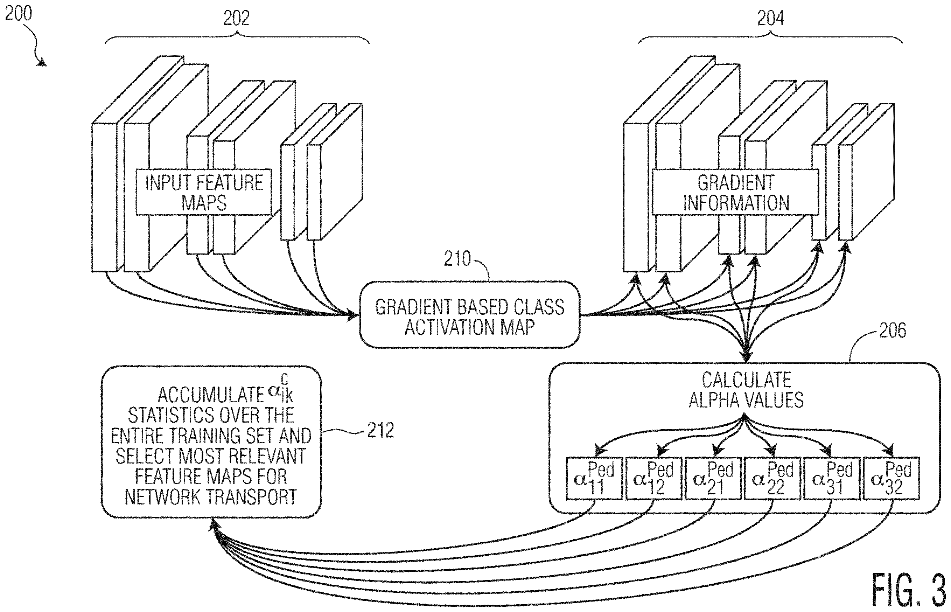

FIG. 3 illustrates how gradient-based pruning method works.

The CNN 200 has input feature maps 202 that process the input tensor. A gradient based class activation map 210 is created from the input maps using gradient flow resulting in gradient information 204.. The channel importance weights $\alpha_{ik}^c$ are obtained as below for a semantic segmentation model by summing the gradients for the different parts of the model over the different parts of the model:

$$\alpha_{ik}^c = \overbrace{\frac{1}{Z} \sum_{m'} \sum_{n'}}^{\text{global average pooling}} \sum_m \sum_n \underbrace{\frac{\partial\, y_{m'n'}^c}{\partial A_{i\,mn}^k}}_{\text{gradients via backprop}}.$$

The result $\alpha_{ik}^c$ which may be interpreted as a saliency metric to assign an importance score to each feature map, and therefore, it could also be used to decide whether feature map $A_i^k$ and its corresponding convolutional $k$ in layer $i$ should be pruned or not.

Following the above process, the gradient-weight $\alpha_{ik}^c$ of k-th channel in convolutional layer $i$ for one input image with class label c is obtained. $\alpha_{ik}^c$ is accumulated across the entire training set $\Omega$ and across all the classes to obtain the global gradient-weight $\alpha_{ik}$ for each channel k in each convolutional layer $i$:

$$\alpha_{ik} = \sum_{\Omega} \alpha_{ik}^c.$$

Then for channels within layer $i$, the $\alpha_{ik}$ values are ranked, and channels with values smaller than some certain threshold are pruned.

The gradient information 204 flowing from the output of the model back into the convolutional layers of the CNN is used to assign importance values to each channel for a specific prediction. The gradient information is called a gradient-weight. For a CFAR (Constant False Alarm Rate) detection (segmentation) task, a pixel-wise class prediction for each position of the image is produced. Suppose there are $l$ classes, then the CFAR detection model will predict a vector $\overline{\mathbf{y}}$ = $[y^{c_1}\ y^{c_2},\ ...,\ y^{c_l}]$ for each pixel. For each pixel position, the largest value in $\overline{\mathbf{y}}$ with index $k$ ($k \in [1, l]$) means the model believes this position belongs to class $k$. For an input image with shape $[m, n]$, the detection model obtains $m * n$ values from a tensor with shape $[m, n, l]$ and assigns them to each position of the image as the pixel-wise class labels.

Keeping the original notations in the literature for consistency, to obtain the gradient-weight of k-th channel in $i$-th convolutional layer for pruning purposes, the gradient of the score for class c of the output $y_{m'n'}^c$ (where $m'$, $n'$ are the position index of each pixel) is computed across all the pixels in the final output (the segmentation map) with respect to the k-th feature map activations $A_i^k$ in convolutional layer $i$, i.e., $\dfrac{\partial\, y_{m'n'}^c}{\partial A_i^k}$.

In another embodiment, as mentioned before, an importance score may be assigned to the filters at a class level as well, without aggregating information across the classes. This will enable a focus on particular use cases. For example, the values of $\alpha_{ik}^c$ associated with a specific class c may be focused on. The class c may be images where a cyclist is present. The information among only images including a cyclist may be aggregated. Then the model can be pruned to provide better attention to cyclists.

In yet another embodiment, instead of accumulating the results across all the bins, a weighted score may be calculated where more weight is given to the true positive pixels (as in this specific example) or penalize false positives. This provides an easy way to incorporate a false alarm threshold into the pruning process

The gradient-weight based pruning approach disclosed herein is a generalized pruning technique for all deep neural networks. It may be applied to any type of DNN. Further, the importance score may be assigned based on convolutional filter, kernel, channel, or class.

For the CFAR detection scenario described in FIGs. 1 and 2, gradient-weight pruning is applied to the detection model that was developed. The pruning ratios may set to be The pruning ratio may be decided by trading off the model's computational cost and model's performance. The computational cost (FLOPS) vs performance (mIoU) may be plotted to find the appropriate tradeoff of those two factors. The model up to more than 90% if required by the limitations of some edge processors.

Experimental results show that neural networks pruned by gradient-weight could have better performance in terms of the evaluation metrics while still being the same model size compared with other pruning methods. Table 1 below illustrates simulation results for five different examples. The first line (2D dilation-0%-pruned) illustrates the number of parameters and performance for the model with no pruning. The next two lines illustrate the number of parameters and performance for the model pruned to 50% and 70% using norm pruning. Finally, the last two lines illustrate the number of parameters and performance for the model pruned to 50% and 70% using gradient-weight based pruning. by comparing the Accuracy of different models (using same pruning ratio but different pruning method), the gradient-weight pruning achieves a similar or slightly better performance as pruning. Because of the same pruning levels the L1 norm pruned cases and the gradient-weight-pruned cases have the same number of parameter, the same number of operations per frame and per second, and the same number of activations. The resulting accuracy for the 50% gradient-weight pruned is 78.31% versus 77.88% for the 50% L1 norm pruned case, which is a slight improvement. Similarly, the resulting accuracy for the 70% gradient-weight pruned is 78.88% versus 77.04% for the 70% L1 norm pruned case, which is a slight improvement.

Table 1

| Binary classification | Params | Flops (G/frame) | Flops@20 fps (G/s) | Max Activations (Millions) | Accuracy (mIoU %) |
|---|---|---|---|---|---|
| 2D dilation-0%-pruned | 52422 | 0.856 | 17.12 | 1.05 | 77.38 |
| 2D dilation-50%-pruned, L1 | 13414 | 0.218 | 4.36 | 0.52 | 77.88 |
| 2D dilation-70%-pruned, L1 | 5386 | 0.087 | 1.74 | 0.33 | 77.04 |
| 2D dilation-50%-pruned, gradient-weight pruned | 13414 | 0.218 | 4.36 | 0.52 | 78.31 |
| 2D dilation-70%-pruned, gradient-weight pruned | 5386 | 0.087 | 1.74 | 0.33 | 77.88 |

Further analysis of the results for the different approaches were carried out to determine the correlation between the filters selected for pruning by gradient-weight and approaches.

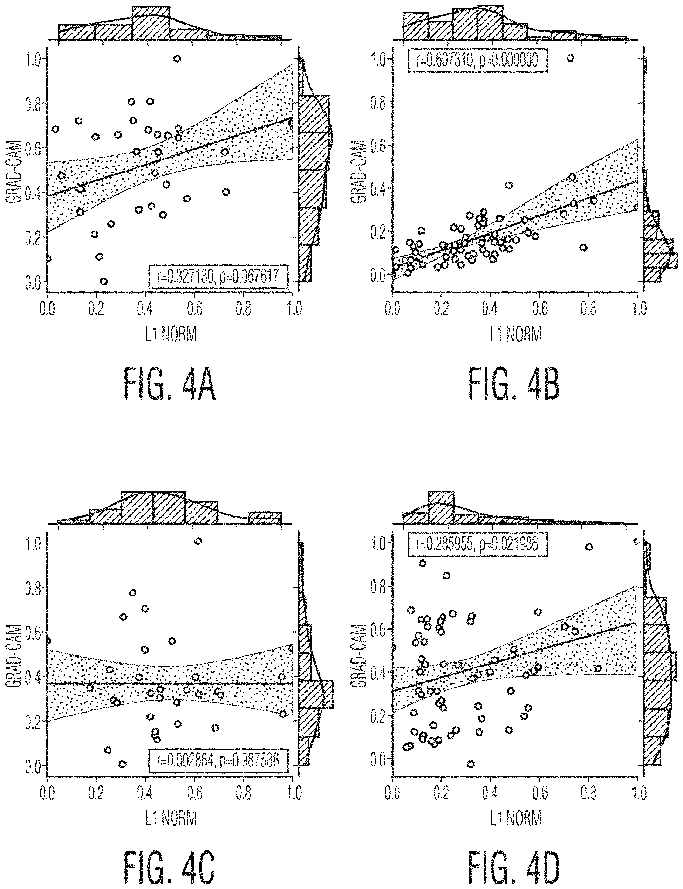

FIGs. 4A-D illustrate the correlation between filters selected for pruning by gradient-weight pruning and L1 norm pruning. FIGs. 4A-D are plots that illustrate the L1 norm value and the gradient-weights values for each of the weights in the first and second layer of a binary CFAR detection model. Each point in the scatter plot indicates one channel within one layer. The x and y axis shows its normalized L1 norm value associated with the weight and the normalized gradient-weight. The top and right histogram plots illustrate the distribution of the normalized L1 norm values and normalized gradient-weight values within one layer correspondingly. The correlation coefficient r value and statistical significance p value within each plot illustrates the correlation coefficient of each channels normalized L1 norm and normalized gradient-weight based weight and whether the correlation is significant. FIGs. 4A and 4B illustrate a sample of selected channel correlation values between L1 norm and gradient-weight values. FIGs. 4A and 4B illustrate a plot for the first and second layers, respectively, of a binary CFAR detection model with atrous convolution. FIGs. 4C and 4B illustrate the plots for the first and second layers, respectively, of the binary CFAR detection model without atrous convolution. If the L1 norm and gradient-weight values are highly correlated they would tend to have about the same value and would lie near the line $y = x$. This is not the case in FIGs. 4A-4D. Further, the histogram plots along the top and left side of the FIGs. illustrated very different distribution of the weight values. These results show that in most cases the two pruning techniques ranks the filters very differently thereby illustrating that they look for different signals to evaluate the pruning filters. This indicates that the two methods look for different saliency metrics when evaluating the pruning criterion. Therefore, the two methods can be complementary to each other and used as a part of an ensemble pruning methodology.

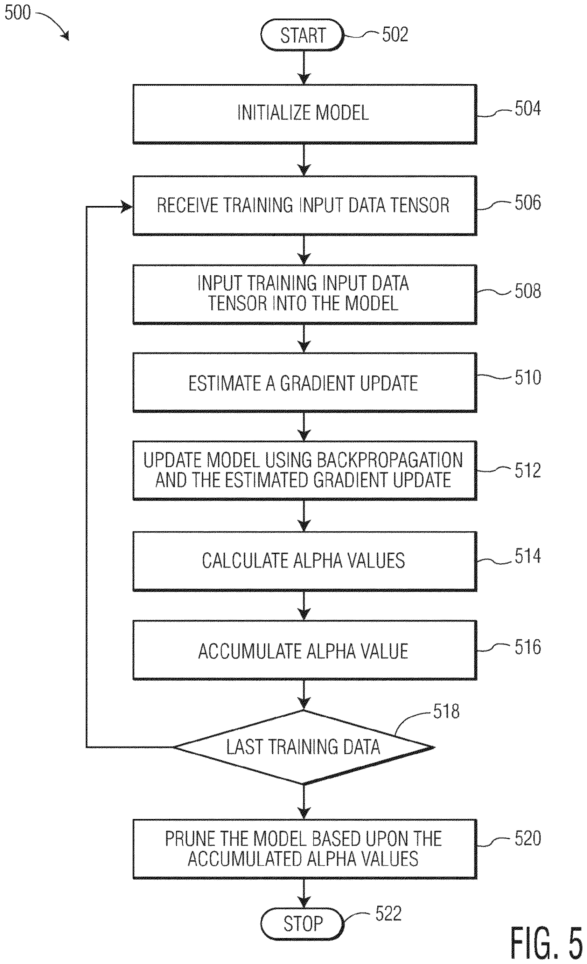

FIG. 5 illustrates a flow diagram that illustrates a gradient-weight pruning method. The gradient-weight pruning method starts at step 502 and then initializes the model at step 504. Any known method of initializing the specific type of model being trained and then pruned may be used. Next, the gradient-weight pruning method 500 will receive an input data tensor from the training data set at step 506. This training input data tensor is then input into the . The gradient-weight pruning method 500 then estimates a gradient update 510. This estimation may be accomplished using known gradient descent optimization techniques based upon a specific loss model, such as for example, focal loss or weighted cross-entropy loss. The gradient-weight pruning method 500 updates the model using backpropagation and the estimated gradient update at step 512. The gradient-weight pruning method 500 then calculates the alpha values for the model at step 514. This may be a calculation of $\alpha_{ik}^{c}$ as described above. The gradient-weight pruning method 500 also accumulates the alpha values over the multiple runs of the training process at step 516. Then the gradient weight pruning method 500 determines if the last training data has been used at step 518. If not, the gradient weight pruning method 500 returns to receiving the next training data input at step 506. If so, then the gradient weight pruning method 500 prunes the model based upon the accumulated alpha values at step 520. The pruning involves first ranking the alpha values calculated for different parts of the model by output classification in this example. This then identifies the parts of the model that then may be pruned. This may be done using known pruning techniques that prune weights, kernels, features, layers, filters, units, neurons, etc. In one embodiment, a lowest predetermined number of sorted values may be selected for pruning. The gradient-weight pruning method 500 then ends at step 522.

In another embodiment, after the gradient-weight pruning is complete, another pruning technique may be further applied to the pruned mode. For example, L1 norm pruning may next be applied to the model. The use of two or more pruning approaches including the gradient-weight pruning may lead to further reduction in the model size, while maintaining an acceptable model accuracy.

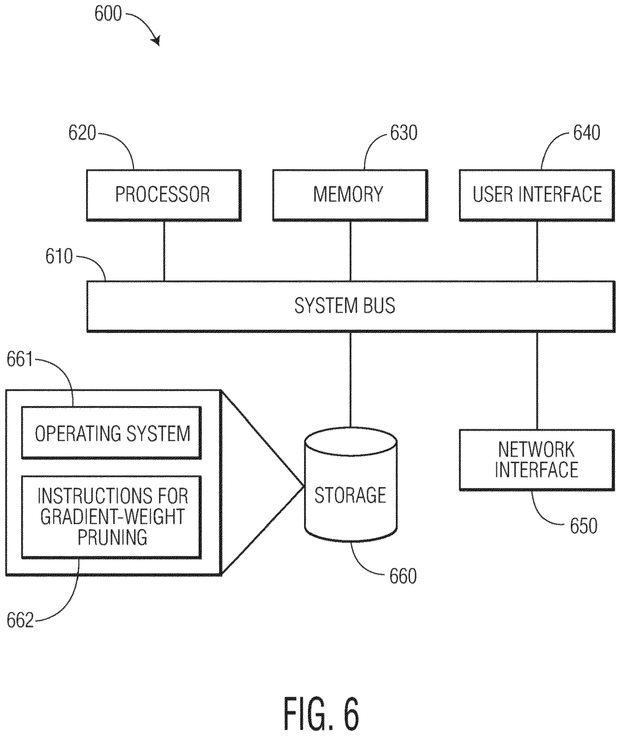

FIG. 6 illustrates an exemplary hardware diagram 600 for implementing the gradient-weight pruning method described in FIGs. 1-4. As shown, the device 600 includes a processor 620, memory 630, user interface 640, network interface 650, and storage 660 interconnected via one or more system buses 610. It will be understood that FIG. 6 constitutes, in some respects, an abstraction and that the actual organization of the components of the device 600 may be more complex than illustrated.

The processor 620 may be any hardware device capable of executing instructions stored in memory 630 or storage 660 or otherwise processing data. As such, the processor may include a microprocessor, microcontroller, graphics processing unit (GPU), neural network processor, field programmable gate array (FPGA), application-specific integrated circuit (ASIC), or other similar devices.

The memory 630 may include various memories such as, for example L1, L2, or L3 cache or system memory. As such, the memory 630 may include static random-access memory (SRAM), dynamic RAM (DRAM), flash memory, read only memory (ROM), or other similar memory devices.

The user interface 640 may include one or more devices for enabling communication with a user. For example, the user interface 640 may include a display, a touch interface, a mouse, and/or a keyboard for receiving user commands. In some embodiments, the user interface 640 may include a command line interface or graphical user interface that may be presented to a remote terminal via the network interface 650.

The network interface 650 may include one or more devices for enabling communication with other hardware devices. For example, the network interface 650 may include a network interface card (NIC) configured to communicate according to the Ethernet protocol or other communications protocols, including wireless protocols. Additionally, the network interface 650 may implement a TCP/IP stack for communication according to the TCP/IP protocols. Various alternative or additional hardware or configurations for the network interface 650 will be apparent.

The storage 660 may include one or more machine-readable storage media such as read-only memory (ROM), random-access memory (RAM), magnetic disk storage media, optical storage media, flash-memory devices, or similar storage media. In various embodiments, the storage 660 may store instructions for execution by the processor 620 or data upon with the processor 620 may operate. For example, the storage 660 may store a base operating system 661 for controlling various basic operations of the hardware 600. The storage 660 may store instructions 662 that implement the gradient-weight pruning method described in FIGs. 1-4.

It will be apparent that various information described as stored in the storage 660 may be additionally or alternatively stored in the memory 630. In this respect, the memory 630 may also be considered to constitute a "storage device" and the storage 660 may be considered a "memory." Various other arrangements will be apparent. Further, the memory 630 and storage 660 may both be considered to be "non-transitory machine-readable media." As used herein, the term "non-transitory" will be understood to exclude transitory signals but to include all forms of storage, including both volatile and non-volatile memories.

The system bus 610 allows communication between the processor 620, memory 630, user interface 640, storage 660, and network interface 650.

While the host device 600 is shown as including one of each described component, the various components may be duplicated in various embodiments. For example, the processor 620 may include multiple microprocessors that are configured to independently execute the methods described herein or are configured to perform steps or subroutines of the methods described herein such that the multiple processors cooperate to achieve the functionality described herein. Further, where the device 600 is implemented in a cloud computing system, the various hardware components may belong to separate physical systems. For example, the processor 620 may include a first processor in a first server and a second processor in a second server.

As used herein, the term "non-transitory machine-readable storage medium" will be understood to exclude a transitory propagation signal but to include all forms of volatile and non-volatile memory. When software is implemented on a processor, the combination of software and processor becomes a single specific machine. Although the various embodiments have been described in detail, it should be understood that the invention is capable of other embodiments and its details are capable of modifications in various obvious respects.

Because the data processing implementing the present invention is, for the most part, composed of electronic components and circuits known to those skilled in the art, circuit details will not be explained in any greater extent than that considered necessary as illustrated above, for the understanding and appreciation of the underlying concepts of the present invention and in order not to obfuscate or distract from the teachings of the present invention.

Although the invention is described herein with reference to specific embodiments, various modifications and changes can be made without departing from the scope of the present invention as set forth in the claims below. Accordingly, the specification and figures are to be regarded in an illustrative rather than a restrictive sense, and all such modifications are intended to be included within the scope of the present invention. Any benefits, advantages, or solutions to problems that are described herein with regard to specific embodiments are not intended to be construed as a critical, required, or essential feature or element of any or all the claims.

Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles.

Unless stated otherwise, terms such as "first" and "second" are used to arbitrarily distinguish between the elements such terms describe. Thus, these terms are not necessarily intended to indicate temporal or other prioritization of such elements.

Any combination of specific software running on a processor to implement the embodiments of the invention, constitute a specific dedicated machine.

It should be appreciated by those skilled in the art that any block diagrams herein represent conceptual views of illustrative circuitry embodying the principles of the invention.

**Claims**

1.   A data processing system comprising instructions embodied in a non-transitory computer readable medium, the instructions for pruning a machine learning model in a processor, the instructions, comprising:

   training the machine learning model using training input data;
   calculating alpha values for different parts of the machine learning model based on gradients used in training the machine learning model, wherein the alpha values are an importance metric;
   accumulating the calculated alpha values across training iterations; and
   pruning the machine learning model based upon the accumulated alpha values.

2.   The data processing system of claim 1, wherein pruning the machine learning model includes:

   sorting the accumulated calculated alpha values;
   selecting a lowest predetermined number of sorted values; and
   pruning the machine learning model based upon the selected number of values.

3.   The data processing system of any one of claims 1 to 2, wherein calculating alpha values for different parts of the machine learning model based on gradients used in training the machine learning model includes summing the gradients for the different parts of the machine learning model over the different parts of the machine learning model.

4.   The data processing system of claim 3, wherein summing the gradients for the different parts of the machine learning model over the different parts includes assigning an importance score to filters in the machine learning model at a class level.

5.   The data processing system of claim 3, wherein summing the gradients for the different parts of the machine learning model over the different parts includes weighing the gradients before summing.

6.   The data processing system of claim 3, wherein summing the gradients for the different parts of the machine learning model over the different parts includes calculating:

$$\alpha_{ik}^c = \overbrace{\frac{1}{Z} \sum_{m'} \sum_{n'}}^{\text{global average pooling}} \sum_m \sum_n \underbrace{\frac{\partial y_{m'n'}^c}{\partial A_{i\,mn}^k}}_{\text{gradients via backprop}}$$

where $\alpha_{ik}^c$ are the alpha values, $Z = m' \cdot n' \cdot m \cdot n$, $m'$ and $n'$ are the position index of each element in the final output $y_{m'n'}^c$, m and $n$ are the position index of each element in the different part,

$$\frac{\partial y^c_{m'n'}}{\partial A^k_{i\,mn}}$$

is the gradient, and $A^k_i$ is the $k^{th}$ feature map activation of the $i^{th}$ layer.

7. The data processing system of claim 6, wherein accumulating the calculated alpha values across training iterations includes summing $\alpha^c_{ik}$ over the training set.

8. The data processing system of claim 7, wherein accumulating the calculated alpha values across training iterations includes calculating:

$$\alpha_{ik} = \sum_{\Omega} \alpha^c_{ik},$$

where $\Omega$ represents the entire training set and classes and $\alpha_{ik}$ is an importance metric for the $i^{th}$ layer and the $k^{th}$ channel.

9. The data processing system of claim 8, wherein pruning the machine learning model includes sorting the $\alpha_{ik}$ values, selecting a lowest predetermined number of sorted values, and pruning the machine learning model based upon the selected number of values.

10. The data processing system of claim 9, wherein pruning the machine learning model based upon the selected number of values includes pruning one of classes, weights, kernels, features, layers, filters, units, and neurons.

11. The data processing system of any one of claims 1 to 10, wherein the machine learning model is one of a deep-learning neural network and a convolutional neural network.

12. The data processing system of any one of claims 1 to 11, wherein training the machine learning model using training input data includes:

    initializing the machine learning model;
    inputting a plurality of training input data tensors into the machine learning model in a plurality of iterations;
    estimating a gradient update based upon an output of the machine learning model; and
    updating machine learning model weights based upon the gradient update using backpropagation.

13. A method of pruning a machine learning model, comprising:

    training the machine learning model using training input data;
    calculating alpha values for different parts of the machine learning model based on gradients used in training the machine learning model, wherein the alpha values are an importance metric;
    accumulating the calculated alpha values across training iterations; and
    pruning the machine learning model based upon the accumulated alpha values.

14. The method of claim 13, wherein pruning the machine learning model includes sorting the accumulated calculated alpha values, selecting a lowest predetermined number of sorted values, and pruning the machine learning model based upon the selected number of values.

15. The method of claim 13 or 14, wherein calculating alpha values for different parts of the machine learning model based on gradients used in training the machine learning model wherein the includes:
    summing the gradients for the different parts of the machine learning model over the different parts of the machine

learning model.

FIG. 1

FIG. 2

EP 4 443 334 A1

FIG. 3

EP 4 443 334 A1

FIG. 4A

FIG. 4B

FIG. 4C

FIG. 4D

500

START — 502

INITIALIZE MODEL — 504

RECEIVE TRAINING INPUT DATA TENSOR — 506

INPUT TRAINING INPUT DATA TENSOR INTO THE MODEL — 508

ESTIMATE A GRADIENT UPDATE — 510

UPDATE MODEL USING BACKPROPAGATION AND THE ESTIMATED GRADIENT UPDATE — 512

CALCULATE ALPHA VALUES — 514

ACCUMULATE ALPHA VALUE — 516

LAST TRAINING DATA — 518

PRUNE THE MODEL BASED UPON THE ACCUMULATED ALPHA VALUES — 520

STOP — 522

FIG. 5

600

620 PROCESSOR

630 MEMORY

640 USER INTERFACE

610 SYSTEM BUS

661 OPERATING SYSTEM

INSTRUCTIONS FOR GRADIENT-WEIGHT PRUNING

662

STORAGE

NETWORK INTERFACE

650

660

FIG. 6

Europäisches
Patentamt

European
Patent Office

Office européen
des brevets

# EUROPEAN SEARCH REPORT

Application Number

EP 24 15 5066

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 110 942 141 A (UNIV TSINGHUA) 31 March 2020 (2020-03-31) * paragraphs [0002] - [0070] * | 1-15 | INV. G06N3/045 G06N3/0495 G06N3/082 |
| A | JASDEEP SINGH GROVER ET AL: "DeepCuts: Single-Shot Interpretability based Pruning for BERT", ARXIV.ORG, CORNELL UNIVERSITY LIBRARY, 201 OLIN LIBRARY CORNELL UNIVERSITY ITHACA, NY 14853, 27 December 2022 (2022-12-27), XP091403671, * pages 1-6 * | 1-15 | G06N3/084 |
| A | CN 107 977 703 A (NVIDIA CORP) 1 May 2018 (2018-05-01) * the whole document * | 1-15 | |

TECHNICAL FIELDS
SEARCHED      (IPC)

G06N

The present search report has been drawn up for all claims

| Place of search | Date of completion of the search | Examiner |
|---|---|---|
| The Hague | 26 August 2024 | Moran, Matthew |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 15 5066

This annex lists the patent family members relating to the patent documents cited in the above-mentioned European search report.
The members are as contained in the European Patent Office EDP file on
The European Patent Office is in no way liable for these particulars which are merely given for the purpose of information.

26-08-2024

| Patent document cited in search report | | Publication date | Patent family member(s) | Publication date |
|---|---|---|---|---|
| CN 110942141 | A | 31-03-2020 | NONE | |
| CN 107977703 | A | 01-05-2018 | NONE | |

EPO FORM P0459

For more details about this annex : see Official Journal of the European Patent Office, No. 12/82